# EUROPÄISCHE PATENTSCHRIFT

(11) **EP 1 922 236 B1**
(45) Veröffentlichungstag und Bekanntmachung des Hinweises auf die Patenterteilung: **01.10.2014**
(21) Anmeldenummer: 06791924.1
(22) Anmeldetag: 08.09.2006
(51) Int. Cl.: B61L 25/02, G01S 5/14, H02J 7/35

(54) **ORTUNGSGERÄT**
LOCATING DEVICE
APPAREIL DE LOCALISATION

(30) Priorität: 08.09.2005 AT 14662005
(43) Veröffentlichungstag der Anmeldung: 21.05.2008
(73) Patentinhaber: Tarter, Philipp, 1190 Wien (AT)
(72) Erfinder: Tarter, Philipp, 1190 Wien (AT)
(74) Vertreter: Puchberger, Peter
(86) Internationale Anmeldenummer: PCT/EP2006/008754
(87) Internationale Veröffentlichungsnummer: WO 2007/028624

(56) Entgegenhaltungen:
- EP-A1- 0 859 454
- WO-A-95/29410
- US-B1- 6 339 397

## Beschreibung

Die Erfindung betrifft ein Ortungsgerät für bewegte Objekte gemäß Anspruch 1 sowie ein Verfahren zur Ortung gemäß Anspruch 12. Solche bewegte Objekte sind insbesondere Schienenfahrzeuge, können aber auch Straßenfahrzeuge, Container, Schiffe oder sich bewegende Personen oder Tiere sein.

Bekannt ist es, Satelliten-Ortungsmodule zur Ermittlung der Ortungskoordinaten vorzusehen. In Verbindung mit einem Mobilfunkmodul können die Ortungskoordinaten zB mittels Kurznachrichten an einen Kurznachrichtenempfänger übermittelt werden, sodass zu jeder Zeit die Position des bewegten Objektes festgestellt werden kann.

Ein besonderes Aufgabengebiet für Ortungsgeräte stellt die logistische Verfolgung und Ortung von Eisenbahnwaggons dar. Beispielsweise gibt es derzeit in Europa etwa 800.000 Waggons. Inhaber der Waggons sind neben den Eisenbahnbetreibern insbesondere auch private Firmen. Statistisch gesehen haben Waggons eine durchschnittliche Stehzeit von 95 % und fahren lediglich 2,5 % produktiv. Die restlichen 2,5 % fährt jeder Waggon leer.

Bekannte Systeme zur Ortung der Eisenbahnwaggons haben den Nachteil der externen Stromversorgung über Batterien oder Anschluss an Betriebsstromsysteme der Waggons. Batterien und Akkumulatoren entleeren sich mit der Zeit und müssen aufwendig gewartet werden. Die Lebensdauer einer Batterie beträgt nicht mehr als 2 Jahre. Überdies sind batteriebetriebene Ortungsgeräte relativ voluminös und schwer, sodass die Anbringung an Eisenbahnwaggons problematisch ist. Selbstverständlich ist die Ortung mit diesen Systemen nur dann möglich, wenn die Batterie oder das Stromversorgungssystem Strom liefert. Die Lebensdauer einer Batterie ist aufgrund der elektrochemischen Prozesse begrenzt. Somit sind solche Ortungssysteme mit Batterien nicht einsatzfähig, wenn zB der Standort des Waggons geortet werden muss, um die Batterie auszuwechseln.

Ein weiterer Nachteil der bisherigen Ortungssysteme mit GPS-Systemen oder anderen satellitengestützten Ortungsmodulen liegt darin, dass der Stromverbrauch hoch ist. Das Ortungsgerät muss zumindest zeitweise in Betrieb gesetzt werden, das Satellitenortungsmodul muss die Ortungskoordinaten ermitteln und über ein Mobilfunkmodul müssen die Ortungskoordinaten an einen Empfänger gesendet werden. Dies erfolgte bisher zB in festgelegten Zeitabständen, egal ob der Waggon sich auf Strecke befindet oder irgendwo für längere Zeit abgestellt ist.

Eine Aufgabe der vorliegenden Erfindung ist es, das Ortungsgerät von jeglicher externen Stromversorgung dauerhaft unabhängig zu machen und weitgehende Wartungsfreiheit über mehrere Jahre zu gewährleisten. Der Stromverbrauch soll minimiert werden. Bei Ausfall des Satellitenortungssystems soll dennoch die Ortungsfunktion möglich sein.

Das Dokument WO 95/29410 A offenbart den Oberbegriff des Anspruchs 1.

Weitere vorteilhafte Merkmale der Erfindung sind den Patentansprüchen der nachfolgenden Beschreibung und den Zeichnungen zu entnehmen.

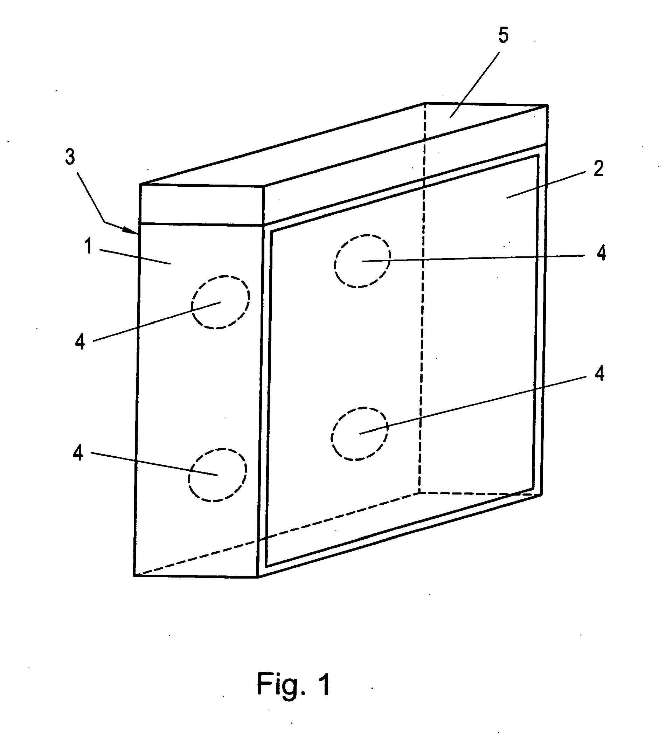

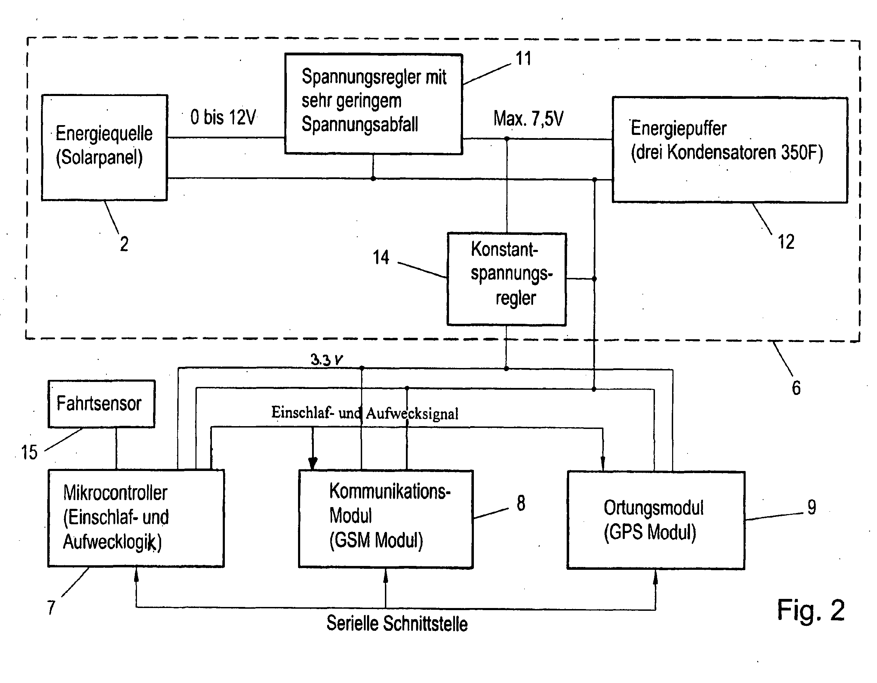

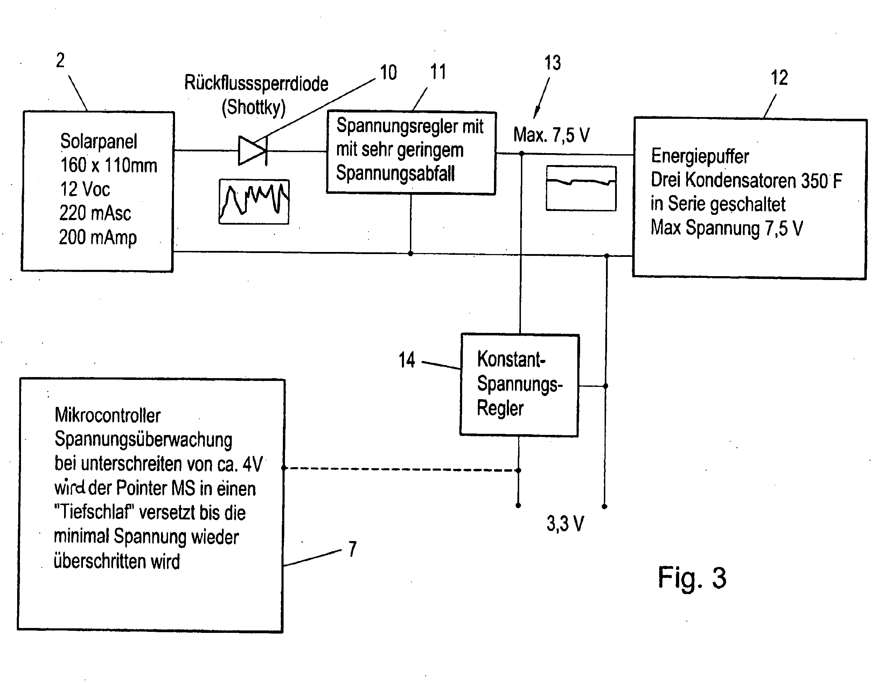

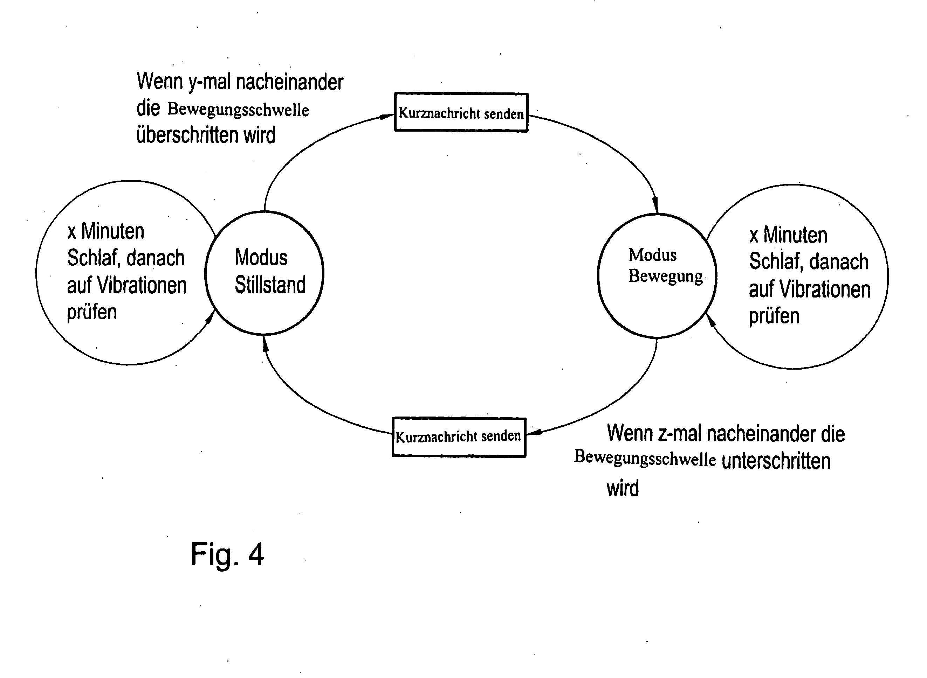

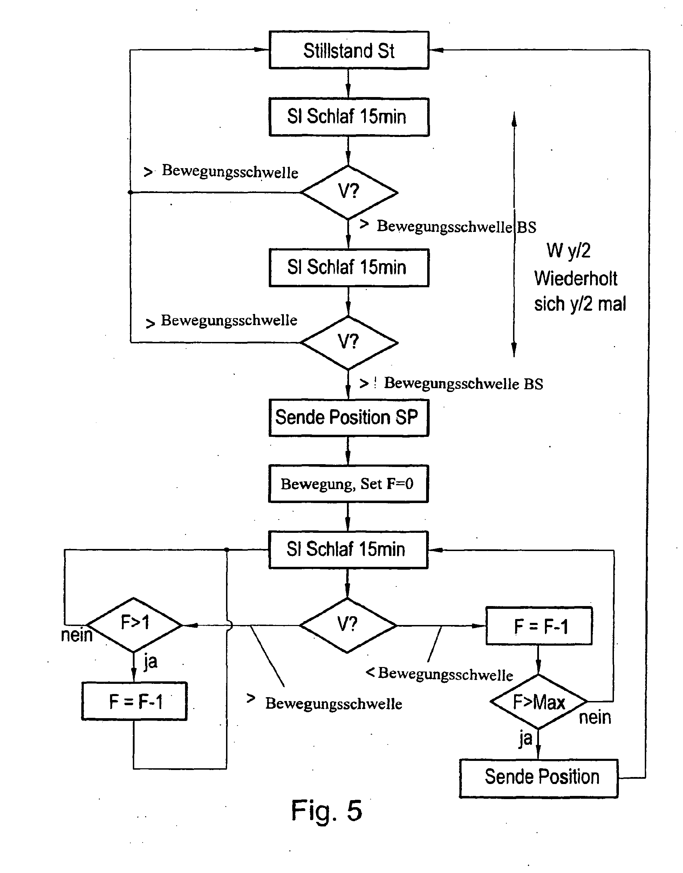

Fig. 1 zeigt das Ortungsgerät in Schrägansicht. Fig. 2 ist ein Blockschaltbild des Ortungsgerätes. Fig. 3 ist ein Blockschaltbild der Energieversorgung und Fig. 4 ein Zustandsdiagramm der Aufwecklogik. Fig. 5 zeigt einen Flowchart der Aufwecklogik.

Gemäß Fig. 1 ist das Ortungsgerät als vollkommen autarke Vorrichtung ausgebildet, die keinerlei Anschlüsse wie Stromzufuhr etc. benötigt. Sämtliche Komponenten des Ortungsgerätes sind in einem Gehäuse 1 angeordnet. Das Gehäuse ist bevorzugt witterungsfest und vor Vandalismus geschützt. Es kann zB aus gefrästem Aluminium bestehen, wobei an der Außenseite keinerlei Schrauben sichtbar sind. Das Solarpanel kann zur Gewährleistung der Schlagfestigkeit glasfaserverstärkt sein und elastisch auf das Gehäuse in eine Vertiefung geklebt sein. Auf der Außenseite befindet sich ein Solarpanel 2. An der Rückseite 3 befinden sich in diesem Ausführungsbeispiel vier Haftmagnete 4, mit deren Hilfe ein einfaches Haften des Ortungsgerätes an einer Metallfläche eines Fahrzeuges wie zB Eisenbahnwaggons ermöglicht ist. An der Rückseite 3 kann zusätzlich auch noch eine Klebestelle vorgesehen werden, um die Haftung noch zu verbessern. Oben auf dem Gehäuse 1 sitzt ein Antennenkopf 5. Die Abmessungen des Ortungsgerätes können beispielsweise folgende sein: Höhe = 170 mm, Breite = 110 mm, Tiefe = 40 mm, Masse =1,2 kg. Die Ausmaße des Ortungsgerätes können so geplant sein, dass das Ortungsgerät auch an der Seitenwand eines Schiffs- oder Eisenbahncontainers in der schützenden Vertiefung des Wellenblechs Platz findet.

Gemäß Blockschaltbild der Fig. 2 umfasst das Gerät die Energieversorgung 6, ein elektrisches Steuergerät 7, das Kommunikationsmodul 8 und das Ortungsmodul 9. Weiters ist ein Bewegungssensor 15 vorgesehen. Alle diese Teile befinden sich - ausgenommen das Solarpanel - innerhalb des Gehäuses 1 des Ortungsgerätes.

Die Stromversorgung 6 ist in Fig. 3 noch gesondert dargestellt. Das Solarpanel 2 liefert in Abhängigkeit von der Sonneneinstrahlung Strom mit einer Spannung von 0 bis 12 Volt. Der Strom des Solarpanels wird unter Zwischenschaltung einer Rückflusssperrdiode 10 durch einen Speise-Spannungsregler 11 auf die Höchstspannung des nachfolgenden Energiepuffers 12 herabgeregelt. Im vorliegenden Fall ist die Höchstspannung des Energiepuffers 7,5 Volt. Als Energiepuffer wird gemäß vorliegender Erfindung eine Kondensatoranordnung vorgesehen, die zB aus drei Kondensatoren mit je 350 F in Serie geschaltet besteht. Als Speise-Spannungsregler 11 wird ein solcher mit möglichst geringem Spannungsabfall eingesetzt.

Die Stromabnahme für die Stromversorgung des Gerätes erfolgt an der Verzweigungsstelle 13 zwischen Speise-Spannungsregler 11 und Energiepuffer 12 bevorzugt über einen Konstantspannungsregler 14. Solange genügend Spannung anliegt, regelt der Konstantspannungsregler 14 den Strom auf einen Betriebsstrom von etwa 3,3 Volt herunter, was durch das elektronische Steuergerät 7 überwacht wird.

Gemäß Fig. 2 wird das elektronische Steuergerät 7 auch von dem Bewegungssensor 15 angesteuert, der in bevorzugter Weise ein Vibrationssensor ist, der ebenfalls im Gehäuse 1 untergebracht sein kann. Der Bewegungssensor 15 spricht an, wenn Bewegungsvibrationen auftreten und anzeigen, dass sich das Gerät gemeinsam mit dem Objekt in Bewegung befindet. Weiters wird gemeldet, wenn das Objekt steht und somit keine Vibrationen auftreten.

Das elektronische Steuergerät 7 arbeitet mit einer Aufwecklogik. Die Aufwecklogik basiert auf einer periodischen Prüfung des Bewegungssensors 15. Wenn ein voreingestellter Wert als Bewegungsschwelle wiederholt erreicht wird, wird das Gerät mit Betriebsspannung aus dem Energiepuffer oder aus der Energiequelle direkt versorgt. Das Ortungsmodul 9 liefert die Ortungskoordinaten und diese werden durch das Kommunikationsmodul 8 als Kurznachricht über das Mobilfunknetz versendet. Die Kurznachricht wird an einen hier nicht dargestellten zentralen Kurznachrichtenempfänger übertragen und weiter ausgewertet.

Das Ortungsmodul 9 kann ein GPS-Modul und das Kommunikationsmodul 8 ein GSM-Modul sein. Selbstverständlich können diese Module nach den jeweils zur Verfügung stehenden globalen Ortungssystemen (zB das künftige Gallileo-System) und Mobilenfunknetzen (zB auch UMTS) eingerichtet sein. Das Kommunikationsmodul (Mobilfunkmodul) 8 ist bevorzugt auch zur Ermittlung und Speicherung der Zelleninformationen des Mobilfunknetzes eingerichtet. Überdies kann die Feldstärke des Mobilfunksenders ermittelt und zur Ortung herangezogen werden.

Wie in Fig. 4 dargestellt, kann beispielsweise durch die Aufwecklogik das Gerät zwei Modi aufweisen, nämlich den Modus Stillstand und den Modus Bewegung. Die Logik überprüft im Modus Stillstand nach x Minuten Schlaf den Zustand des Bewegungssensors 15. Wenn y-Mal nacheinander die Bewegungsschwelle, also ein Vibrationsschwellenwert, überschritten wird, wird das Kommunikationsmodul veranlasst, eine Kurznachricht mit den Ortungsdaten abzusenden. Danach befindet sich das System im Modus Bewegung. Das Gerät wird wieder in den Schlafzustand versetzt, da eine weitere Stromspeisung des Gerätes und das laufende Absenden von Kurznachrichten bloß unnötigen Strom verbrauchen würde.

Die Aufwecklogik überprüft den Modus Bewegung in periodischen Abständen von x Minuten. Wenn z-Mal nacheinander die Bewegungsschwelle unterschritten wird, bedeutet dies, dass das Objekt zum Stillstand gekommen ist. Der Betriebsstrom wird eingeschaltet und das entsprechende SMS mit den Ortungskoordinaten wird abgesendet. Das System befindet sich im Modus Füllstand und der Kreislauf kann sich wieder von vorne ausbilden.

Die Elektronik für das Gerät befindet sich also immer im Schlafzustand, außer es werden wiederholt voreingestellte Werte als Bewegungsschwellen erreicht. Dies erfolgt sowohl beim Übergang von Bewegung in den Stillstand als auch von Stillstand in den Modus Bewegung.

Obwohl die Sensorschaltung ein optimiertes Frequenzband besitzen kann, ist es vorteilhaft, über die Verzögerungszähler y und z sicherzustellen, dass ausschließlich länger andauernde Vibrationen berücksichtigt werden. Die Zahl z für das Unterschreiten der Bewegungsschwelle wird bevorzugt höher gewählt, um kurze Aufenthalte des Objektes zB im Zugbetrieb herauszufiltern. Mit der Schlafdauer x wird die Reaktionszeit des Systems eingestellt. Die Prüfung des Vibrätionsspeichers oder Bewegungssensors dauert im üblichen Fall nur einige Sekunden, sodass eine Schlafdauer x zB auf 15 Minuten gestellt werden kann. Damit ergibt sich eine Reaktionszeit von maximal 30 Minuten. Dies ist bei Fahrzeugen wie zB im Eisenbahnbetrieb ausreichend, wenn man bedenkt, dass heute Transportdauern von Wochen üblich sind.

Der Flowchart der Aufwecklogik gemäß Fig. 5 ist selbst erklärend, wobei die eingetragenen Zeichen folgende Bedeutung haben:
- St: = Stillstand
- Sl: = Schlaf
- V?: = Vibration?
- Bs: = Bewegungsschwelle
- W: = Wiederholung
- SP: = Sende Position
- F: = Fahrt
- set F = 0: = setze F = 0
- No: = Nein
- Yes: = Ja

Durch alle diese Maßnahmen und Merkmale ist sichergestellt, dass das Ortungsgerät jederzeit einsatzbereit ist und die benötigten Ortungssignale abgibt. Das Gerät ist autonom und benötigt keine fremde Energiezufuhr. Weiters ist der unerwünschte Einsatz von Batterien oder Akkumulatoren vermieden. Dadurch ergibt sich eine sehr hohe Lebensdauer von beispielsweise mehr als 10 Jahren ohne Wartung. Die Energieversorgung erfolgt mittels Solarpanel wobei die Solarenergie direkt in Kondensatoren gespeichert wird, sodass die elektrische Energie fotovoltaischen Ursprungs ohne Umwandlung gepuffert wird.

Die Nutzung der in den Kondensatoren gespeicherten Solarenergie erfolgt durch die Aufwecklogik äußerst sparsam, da durch Steuerung mit Hilfe des Bewegungssensors die für die Ortung und Kommunikation notwendigen Module erst bei Auftreten oder Nicht-Auftreten einer Bewegungsvibration eingeschaltet werden. Alle Module werden innerhalb kurzer Zeit wieder in den Schlafmodus gebracht, in dem fast kein Strom verbraucht wird. Auch nach längerer Zeitspanne ohne Stromeinspeisung ist ein rasches Hochfahren des Gerätes bis zur Absendung der Ortungsinformation möglich.

Darüber hinaus kann das Ortungsgerät mit Sensoren für physikalische Größen ausgerüstet werden. Die damit erfassten Daten werden ebenfalls an die Kurznachricht-Empfänger durch die Funkschnittstelle gesendet.

Wie oben ausgeführt, ist das Ortungsgerät bevorzugt mit einem GPS-Empfänger zur Positionsermittlung und mit einem Mobilfunk-Gerät (GSM/UMTS) zur Kommunikation ausgestattet. Im GPS Betrieb wird die Positionsermittlung vom GPS-Empfänger wahrgenommen. Diese Position wird anschließend über das Mobilfunknetz an eine zentrale Stelle übermittelt.

Ein Nachteil der Positionsermittlung durch GPS kann der Umstand sein, dass das GPS-Modul Energie verbraucht, die Kosten des Moduls relevant sind und darüber hinaus das GPS-Signal durch Störsender gefälscht und bei "Krisen" vom GPS-Betreiber ausgeschaltet oder bewusst verrauscht (scrambling) werden kann.

Gemäß der vorliegenden Erfindung ist es möglich, auch ohne GPS eine Ortungsinformation zu erhalten und damit das Ortungsgerät robust gegen GPS-Ausfälle zu machen.

Es ist bekannt, dass ein digitales zellulares Mobilfunknetz aus über die fläche verteilten Sendeeinrichtungen (Basisstationen, Node-B) besteht, die in einem Umkreis von einigen hundert Metern bis zu einigen Kilometern wirken. Die Dichte der Sendeeinrichtungen hängt im Wesentlichen von der Topologie und der zu versorgenden Teilnehmerdichte ab. Dabei ist für die Ortung der Umstand wesentlich, dass jede Sendeeinrichtung weltweit eine eindeutige Kennung (Network Code, Location Area Code und Cell Identity oder CID) besitzt. Es ist Stand der Technik, diese Information für die Zwecke der Ortung zu Verwenden. Die Information über den Standort ist jedoch betreiberspezifisch und meistens geheim. Darüber hinaus sind Betreiber meistens nicht interessiert, ihre Daten bekannt zu geben, da sie ihre eigenen Dienste einsetzen wollen. Um länderübergreifend eine solche Ortung einzusetzen, müssten schließlich die Informationen von vielen hundert Betreibem gesammelt und aktuell gehalten werden, dies ist in der Praxis schwierig oder unmöglich.

Gemäß vorliegender Erfindung wird auch vorgeschlagen, dass während des GPS-Betriebes zu jedem Messpunkt zusätzlich die Zellen-Information (Cell ID) aus dem Mobilfunknetz gespeichert und mit der Orts-Information korreliert wird. Im Lauf jeder Zeit werden entlang der gefahrenen Strecken mehr und mehr Punkte korreliert und so der Sendebereich jeder Funkzelle ermittelt. Durch diese Information kann bei Ausfall oder Störung des GPS die Ortung auf Zellenbasis durchgeführt werden. Die Genauigkeit der Ortung ist durch den Wirkbereich der Funkzelle gegeben. Der Vorteil dabei ist, dass in dicht besiedelten Gebieten - wo auch eine genauere Ortung benötigt wird - die Zellendichte größer und der Sendebereich kleiner ist.

Eine weitere Verbesserung/Verfeinerung der Ortung innerhalb der Zelle kann erreicht werden, indem die Empfangsgeldstärke im Ortungsgerät erfasst wird. Da die Feldstärke innerhalb der Zelle nicht gleich verteilt ist, kann dadurch eine Aussage über die relative Nähe zur Sendeantenne gemacht werden, wodurch die Ortung unterstützt wird. Somit ist gemäß Erfindung das Ortungsverfahren auch dadurch gekennzeichnet, dass während des Betriebes des Ortungsmoduls zu jedem Messpunkt zusätzlich die Zellen-Information aus dem Mobilfunknetz gespeichert und mit den Ortungskoordinaten des Satelliten-Ortungsmoduls korreliert wird. Weiters kann vorgesehen sein, dass entlang einer Bewegungsstrecke aufeinanderfolgende Ortungskoordinaten und Zellen-Informationen gespeichert und die Sendebereiche der Funkzellen ermittelt werden, sodass, insbesondere bei Ausfall des Satelliten-Ortungssystems oder - Ortungs-moduls, die Ortung mittels der Zellen-Informationen durchführbar ist. Weiters kann zusätzlich zur Zelleninformation die Empfangsgeldstärke erfasst und diese zur Berechnung der Entfernung zur Sendeantenne des Mobilfunknetzes herangezogen werden.

## Patentansprüche

1. Ortungsgerät für bewegte Objekte, insbesondere Fahrzeuge, das folgende Komponenten umfasst:
- Solarpanel (2);
- Energiespeicher (12);
- Ortungsmodul (9) zur Ermittlung der Ortungskoordinaten;
- Kommunikationsmodul (8) zur Übermittlung der Ortungskoordinaten per Kurznachrichten und gegebenenfalls zur Ermittlung der Zelleninformation aus dem Mobilfunknetz;
- Bewegungssensor (15);
- elektrisches Steuergerät (7),
wobei das elektrische Steuergerät (7) durch den Bewegungssensor (15) und durch die Betriebsspannung angesteuert ist, und zur Schaltung zwischen einem Schlafmodus und einem Arbeitsmodus des Ortungsgeräts ausgeführt ist,
**dadurch gekennzeichnet, dass**
der Energiespeicher (12) auf Kondensatorbasis ausgeführt ist, und das Steuergerät (7) dazu angepasst ist, das Bewegungssensorsignal periodisch zu prüfen und bei mehrmaligen Überschreiten oder Unterschreiten eines Bewegungsschwellenwertes das Ortungsgerät auf Arbeitsmodus zu schalten und die Ortungskoordinaten per Kurznachricht zu versenden, und das Ortungsgerät nachfolgend wieder in den Schlafmodus zu versetzen.

2. Ortungsgerät nach Anspruch 1, **dadurch gekennzeichnet, dass** ein oder mehrere weitere Sensoren für physikalische Größen vorgesehen sind.

3. Ortungsgerät nach Anspruch 1 oder 2, **dadurch gekennzeichnet dass** der vom Solarpanel (2) erzeugte Strom durch einen Speise-Spannungsregler (11) auf die Höchstspannung der Kondensatoren (12) begrenzt ist und dass der Betriebsstrom der Leitung zwischen Speise-Spannungsregler und Kondensator entnehmbar ist.

4. Ortungsgerät nach Anspruch 3, **dadurch gekennzeichnet dass** zwischen Solarpanel und Speise-Spannungsregler eine Rückflusssperrdiode (10) geschaltet ist.

5. Ortungsgerät nach einem der Ansprüche 1 bis 4, **dadurch gekennzeichnet dass** der Betriebsstrom durch einen Konstant-Spannungsregler (14) geregelt ist.

6. Ortungsgerät nach einem der Ansprüche 1 bis 5, **dadurch gekennzeichnet dass** das Solarpanel eine Leerlaufspannung aufweist, die höher als die Höchstspannung des Kondensators ist.

7. Ortungsgerät nach einem der Ansprüche 1 bis 6, **dadurch gekennzeichnet dass** der Bewegungssensor (15) ein Vibrationssensor ist, bevorzugt auf Basis eines Piezoelektrischen Effektes.

8. Ortungsgerät nach einem der Ansprüche 1 bis 7, dadurch gekenzeichnet, dass das Ortungsgerät durch das elektrische Steuergerät (7) in den Schlafmodus geschaltet wird, wenn die Betriebsspannung einen unteren Grenzwert unterscheidet.

9. Ortungsgerät nach einem der Ansprüche 1 bis 8, **dadurch gekennzeichnet, dass** der Energiespeicher (12) in Form einer Kondensatoranordnung mit drei In Reihe geschalteten Kondensatoren mit einer Kapazität von je 350F besteht.

10. Ortungsgerät nach einem der Ansprüche 1 bis 9, **dadurch gekennzeichnet, dass** das Ortungsmodul (9) als GPS-Modul und das Kommunikationsmodul (8) als GSM-Modul ausgeführt ist.

11. Ortungsgerät nach einem der Ansprüche 1 bis 10, **dadurch gekennzeichnet, dass** das Kommunikationsmodul (8) zur Ermittlung und Speicherung der Zelleninformation des Mobilfunknetzes eingerichtet ist.

12. Verfahren zur Positionsbestimmung mittels eines Ortungsgerätes gemäß einem der Ansprüche 1 bis 11, **dadurch gekennzeichnet, dass** es folgende Schritte umfasst:
- Periodische Überprüfung eines Bewegungssensors (15) zur Bestimmung eines Bewegungs- oder Ruhezustandes,
- bei Feststellung eines Bewegungszustandes durch zumindest zweimalige Registrierung durch den Bewegungssensor (15), Aktivierung einer Einschlaf- und Aufwecklogik, welche ein Ortungsmodul (9) und gegebenenfalls ein Kommunikationsmodul (8) in den Arbeitsmodus schaltet,
- Feststellung der aktuellen Position durch das Ortungsmodul (9),
- Berechnung der zurückgelegten Entfernung von der Ausgangsposition bis zur aktuellen Position,
- bei Überschreiten eines Schwellenwertes für die zurückgelegte Entfernung, Aktivierung des Kommunikationsmoduls (8) und Übermittlung der Ortungs-koordinaten der Kurznachricht an einen Kurznachrichtenempfänger.
- nachfolgende Schaltung des Gerätes in den Schlafmodus und Wiederholung der angeführten Schritte.

13. Verfahren nach Anspruch 12, **dadurch gekennzeichnet, dass** während des Betriebes des Ortungsmoduls zu jedem Messpunkt zusätzlich die Zellen-Information aus dem Mobilfunknetz gespeichert und mit den Ortungskoordinaten des Satelliten-Ortungsmoduls korreliert wird.

14. Verfahren nach Anspruch 12 oder 13, **dadurch gekennzeichnet, dass** entlang einer Bewegungsstrecke aufeinanderfolgende Ortungskoordinaten und Zellen-Informationen gespeichert und die Sendebereiche der Funkzellen ermittelt werden, sodass, insbesondere bei Ausfall des Satelliten-Ortungssystems oder - Ortungsmoduls, die Ortung mittels der Zellen-Informationen durchführbar ist.

15. Verfahren nach einem der Ansprüche 12 bis 14, **dadurch gekennzeichnet, dass** zusätzlich zur Zelleninformation die Empfangsfeldstärke erfasst und diese zur Berechnung der Entfernung zur Sendeantenne des Mobilfunknetzes herangezogen wird.

## Claims

1. A location device for moving objects, in particular vehicles, which device comprises the following components:
- solar panel (2);
- energy store (12);
- location module (9) for determining the location coordinates;
- communications module (8) for transmitting the location coordinates in the form of short messages and, if required, for determining the cell information from the mobile phone network;
- movement sensor (15);
- electrical control unit (7),
wherein the electrical control unit (7) is activated by means of the movement sensor (15) and by the operating voltage, and is embodied so as to enable switching of the location device between a sleep mode and an operating mode,
**characterised in that**
the energy store (12) is embodied in the form of capacitors, and the control unit (7) is adapted for the purpose of checking the movement sensor signal periodically, and, in the event of the latter repeatedly exceeding or falling below a movement threshold, switches the location device to the operating mode and transmits the location coordinates as a short message, and subsequently moves the location device back into the sleep mode.

2. The location device in accordance with claim 1, **characterised in that** one or a plurality of other sensors for physical quantities are provided.

3. The location device in accordance with claim 1 or 2, **characterised in that** the power generated by the solar panel (2) is limited by a supply voltage regulator (11) to the maximum voltage of the capacitors (12) and **in that** the operating current of the line can be drawn between supply voltage regulator and capacitor.

4. The location device in accordance with claim 3, **characterised in that** a reverse flow blocking diode (10) is electrically connected between the solar panel and the supply voltage regulator.

5. The location device in accordance with one of the claims 1 to 4, **characterised in that** the operating current is regulated by means of a constant voltage regulator (14).

6. The location device in accordance with one of the claims 1 to 5, **characterised in that** the solar panel has a no-load voltage that is higher than the maximum voltage of the capacitor.

7. The location device in accordance with one of the claims 1 to 6, **characterised in that** the movement sensor (15) is a vibration sensor, preferably operating on the basis of a piezoelectric effect.

8. The location device in accordance with one of the claims 1 to 7, **characterised in that** the location device is switched by the electrical control unit (7) into the sleep mode if the operating voltage falls below a lower limit.

9. The location device in accordance with one of the claims 1 to 8, **characterised in that** the energy store (12) exists in the form of a capacitor arrangement with three capacitors connected in series, each with a capacity of 350F.

10. The location device in accordance with one of the claims 1 to 9, **characterised in that** the location module (9) is embodied as a GPS module, and the communications module (8) is embodied as a GSM module.

11. The location device in accordance with one of the claims 1 to 10, **characterised in that** the communications module (8) is equipped for purposes of determining and storing the cell information of the mobile phone network.

12. A method for determining position by means of a location device in accordance with one of the claims 1 to 11, **characterised in that** it comprises the following steps:
- periodic checking of a movement sensor (15) for purposes of determining a moving state or a stationary state,
- if a moving state has been established as a result of being registered at least twice by the movement sensor (15), activation of a fall-asleep and wake-up logic, which switches a location module (9) and, if required, a communications module (8) into the operating mode,
- establishment of the current position by means of the location module (9),
- calculation of the distance covered from the starting position to the current position,
- in the event of a threshold value for the distance covered being exceeded, activation of the communications module (8) and transmission of the location coordinates of the short message to a short message receiver.
- subsequent switching of the device into the sleep mode and repetition of the steps as listed.

13. The method in accordance with claim 12, **characterised in that**, while the location module is in operation at each measurement point, in addition the cell information is stored from the mobile phone network and correlated with the location coordinates of the satellite location module.

14. The method in accordance with claim 12 or 13, **characterised in that** successive location coordinates and cell information are stored along a movement route and the transmission zones of the phone network cells are determined so that, in particular in the event of failure of the satellite location system or the location module, location can be undertaken by means of the cell information.

15. The method in accordance with one of the claims 12 to 14, **characterised in that** in addition to the cell information the field strength received is registered, and this is used for purposes of calculating the distance to the transmission antenna of the mobile phone network.

## Revendications

1. Appareil de localisation pour objets en mouvement, en particulier des véhicules, lequel comprend les éléments suivants :
- un panneau solaire (2) ;
- un accumulateur d'énergie (12) ;
- un module de localisation (9) pour déterminer les coordonnées de localisation ;
- un module de communication (8) pour transmettre les coordonnées de localisation par messages courts, et le cas échéant, pour déterminer l'information de cellules provenant du réseau de téléphonie mobile ;
- un détecteur de mouvement (15) ;
- un appareil de commande électrique (7), l'appareil de commande électrique (7) étant commandé par le détecteur de mouvement (15) et par la tension de service et étant réalisé pour la commutation entre un mode de veille et un mode de travail, et inversement, de l'appareil de localisation,
**caractérisé en ce que**
l'accumulateur d'énergie (12) est réalisé sur la base d'un condensateur et **en ce que** l'appareil de commande (7) est adapté pour contrôler périodiquement le signal du détecteur de mouvement et, en cas d'un dépassement répété par le haut ou par le bas d'une valeur de seuil de mouvement, pour commuter l'appareil de localisation afin de le faire passer en mode de travail et envoyer les coordonnées de localisation par messages courts, et pour ensuite faire repasser l'appareil de localisation au mode de veille.

2. Appareil de localisation selon la revendication 1, **caractérisé en ce que** l'on prévoit un ou plusieurs autres détecteurs pour des grandeurs physiques.

3. Appareil de localisation selon la revendication 1 ou 2, **caractérisé en ce que** le courant généré par le panneau solaire (2) est limité, par un régulateur de tension d'alimentation (11), à la tension maximale des condensateurs (12), et **en ce que** le courant de service peut être prélevé de la ligne entre le régulateur de tension d'alimentation et le condensateur.

4. Appareil de localisation selon la revendication 3, **caractérisé en ce qu'**une diode anti-retour (10) est couplée entre le panneau solaire et le régulateur de tension d'alimentation.

5. Appareil de localisation selon l'une des revendications 1 à 4, **caractérisé en ce que** le courant de service est régulé grâce à un régulateur de tension constante (14).

6. Appareil de localisation selon l'une des revendications 1 à 5, **caractérisé en ce que** le panneau solaire présente une tension de marche à vide, laquelle est plus élevée que la tension maximale du condensateur.

7. Appareil de localisation selon l'une des revendications 1 à 6, **caractérisé en ce que** le détecteur de mouvement (15) est un détecteur de vibration, de préférence sur la base d'un effet piézo-électrique.

8. Appareil de localisation selon l'une des revendications 1 à 7, **caractérisé en ce que** l'appareil de localisation est commuté pour passer en mode de veille par l'appareil de commande électrique (7) lorsque la tension de service dépasse par le bas une valeur de seuil inférieure.

9. Appareil de localisation selon l'une des revendications 1 à 8, **caractérisé en ce que** l'accumulateur d'énergie (12) se présente sous la forme d'un agencement de condensateurs avec trois condensateurs connectés en série ayant respectivement une capacité de 350F.

10. Appareil de localisation selon l'une des revendications 1 à 9, **caractérisé en ce que** le module de localisation (9) est réalisé en tant que module GPS, et le module de communication (8) en tant que module GSM.

11. Appareil de localisation selon l'une des revendications 1 à 10, **caractérisé en ce que** le module de communication (8) est étudié pour la détermination et l'accumulation de l'information de cellules du réseau de téléphonie mobile.

12. Procédé pour la détermination de la position à l'aide d'un appareil de localisation selon l'une des revendications 1 à 11, **caractérisé en ce qu'**il comprend les étapes suivantes :
- contrôle périodique d'un détecteur de mouvement (15) pour déterminer un état de mouvement ou de repos,
- en cas de constat d'un état de mouvement grâce à l'enregistrement, au moins de deux fois, par le détecteur de mouvement (15), activation d'une logique de veille ou de réveil, laquelle commute un module de localisation (9), et le cas échéant, un module de communication (8) pour le faire passer en mode de travail,
- constat de la position actuelle grâce au module de localisation (9),
- calcul de la distance parcourue de la position de départ jusqu'à la position actuelle,
- en cas de dépassement d'une valeur de seuil pour la distance parcourue, activation du module de communication (8) et transmission des coordonnées de localisation du message court à un destinataire du message court,
- commutation subséquente de l'appareil pour le faire passer en mode de veille et répétition des étapes indiquées.

13. Procédé selon la revendication 12, **caractérisé en ce que**, pendant le fonctionnement du module de localisation, pour chaque point de mesure, on enregistre en plus l'information de cellules provenant du réseau de téléphonie mobile et la met en corrélation avec les coordonnées de localisation du module de localisation par satellite.

14. Procédé selon la revendication 12 ou 13, **caractérisé en ce que**, le long d'un trajet de déplacement, des coordonnées de localisation successives et informations de cellules sont enregistrées et **en ce que** les plages d'émission des cellules radio sont déterminées de manière à ce que, en particulier en cas de défaillance du système de localisation par satellite ou du module de localisation, la localisation puisse être réalisée à l'aide des informations de cellules.

15. Procédé selon l'une des revendications 12 à 14, **caractérisé en ce que** l'on détecte, en plus de l'information de cellules, la puissance du champ de réception et **en ce que** l'on tienne compte de celle-ci pour le calcul de la distance par rapport à l'antenne d'émission du réseau de téléphonie mobile.
